# EUROPÄISCHE PATENTANMELDUNG

(11) **EP 4 769 849 A1**
(43) Veröffentlichungstag der Anmeldung: **01.07.2026**
(21) Anmeldenummer: 24223717.0
(22) Anmeldetag: 30.12.2024
(51) Int. Cl.: H01R 43/052, H01R 43/28, H02G 1/12, H01R 43/055

(54) **KABELKONFEKTIONIERVORRICHTUNG UND VERFAHREN ZUM KONFEKTIONIEREN EINES KABELS**

(71) Anmelder: Schleuniger AG, 3608 Thun (CH)
(72) Erfinder: Heiniger, David, 3604 Thun (CH); Reimer, Simon, 3267 Seedorf (CH)
(74) Vertreter: Zimmermann & Partner Patentanwälte mbB

(57) **Zusammenfassung**

Es wird eine Kabelkonfektioniervorrichtung (100) zum Konfektionieren von Kabeln angegeben, wobei die Kabelkonfektioniervorrichtung eine Vorschubeinheit (10), konfiguriert zum Vorschieben eines Vorratskabels (1) entlang einer Längsachsrichtung des Vorratskabels (1) über ein Ende der Vorschubeinheit (10) hinaus in einen Bearbeitungsbereich (55) hinein, und eine Kabel-Stützeinrichtung (50) umfasst. Die Kabel-Stützeinrichtung (50) umfasst zumindest einen vorderen Stützteil (51), konfiguriert zum Stützen des vorgeschobenen Vorratskabels (1), und ein Stützteil-Bewegungssystem (51a) zum Bewegen des vorderen Stützteils entlang der Längsachsrichtung über eine Stützteils-Wegstrecke (57) von einer hinteren Position (56) nahe der Vorschubeinheit (10) mindestens bis in den Bearbeitungsbereich hinein hin zu einer vorderen Position (53). Der vordere Stützteil (51) nimmt weniger als ein Drittel, optional weniger als ein Viertel, der Länge in Längsachsrichtung der Wegstrecke (57) zwischen der hinteren und der vorderen Position ein.

Es wird ein Verfahren zum Konfektionieren von Kabeln unter Verwendung der Kabelkonfektioniervorrichtung (100) angegeben.

## Beschreibung

### TECHNISCHES GEBIET

Ausführungsformen der vorliegenden Offenbarung betreffen allgemein eine Kabelkonfektioniervorrichtung zum Konfektionieren eines oder mehrerer Kabel und ein Verfahren zum Konfektionieren eines oder mehrerer Kabel, beispielsweise unter Verwendung der Kabelkonfektioniervorrichtung.

### HINTERGRUND

Typischerweise können Kabelkonfektioniervorrichtungen als Schwenkarm-Maschinen ausgeführt sein. Bei einer Schwenkarm-Maschine kann ein Vorratskabel durch eine Trennvorrichtung durchtrennt werden. Das so entstehende vordere Ende eines Restkabels und/oder das so entstehende hintere Ende eines abgetrennten Kabels können anschließend aus der Längsachse des Vorratskabels bewegt werden, um die jeweiligen Kabelenden zu bearbeiten.

Schwenkarm-Maschinen können nachteilhaft sein, da die Kabelenden zur Bearbeitung aus der Längsachse des Vorratskabels bewegt werden müssen. Dabei können die Kabelenden verbogen werden. Des Weiteren kann ein Leiter in dem Kabel brechen. Der Schwenkprozess kann den Konfektioniervorgang verlangsamen. Eine Schwenkarm-Maschine kann, insbesondere in der horizontalen, viel Platz einnehmen.

Eine Kabelkonfektioniervorrichtung wird allgemein verwendet, um ein oder mehrere Kabel auf eine bestimmte Länge zu bringen und/oder um eines oder beide Kabelenden zu bearbeiten, beispielsweise und ohne Einschränkung abzuisolieren und/oder mit einem Kontakt zu versehen. Wie hierin verwendet, werden Vorgänge, die im Zuge einer Verarbeitung eine oder mehrerer Kabel unter Verwendung der Kabelkonfektioniervorrichtung stattfinden, allgemein unter dem Begriff Konfektionierungsprozess zusammengefasst. Ein Kabelende, wie hierin verwendet, umfasst allgemein einen Bereich, welcher einen Endbereich des zu konfektionierenden Kabels bildet und der eine gewisse Ausdehnung in einer Hauptausdehnungsrichtung des Kabels hat; zumindest im Bereich des Kabelendes verläuft das Kabel typischerweise geradlinig oder im Wesentlichen geradlinig, d. h. es ist eine im Wesentlichen geradlinige Längsachse des Kabels definiert.

Beispielsweise kann ein Vorratskabel von einem Kabelvorrat, beispielsweise einer Kabeltrommel und/oder einer Maschine zur Kabelherstellung, in die Kabelkonfektioniervorrichtung gespeist werden. Das Vorratskabel kann nach einer bestimmten Länge abgeschnitten werden, um ein abgetrenntes Kabel und ein Restkabel (verkürztes, beschnittenes Vorratskabel) bereitzustellen. Das abgetrennte Kabel und/oder das Restkabel kann weiterbearbeitet werden. Beispielweise können die jeweiligen Kabelenden des abgetrennten Kabels und/oder des Restkabels abisoliert und gecrimpt werden.

Beispielweise können die jeweiligen Kabelenden des abgetrennten Kabels und/oder des Restkabels mit einem Kontaktteil versehen werden, z. B. gecrimpt werden. Es kann notwendig sein, das Vorratskabel an oder in der Kabelkonfektioniervorrichtung zu transportieren, beispielsweise vorzuschieben, beispielsweise damit dessen vorderes Ende zu einem Ort gelangen kann, an dem ein nachfolgender Prozessschritt des Konfektionierungsprozesses stattfinden soll. Beispielsweise verläuft das vordere Ende des Kabels während eines Vorschubvorganges durch einen Bereich, in dem ein dauerhaftes Halten bzw. Abstützen, insbesondere ein dauerhaftes Abstützen in Richtung der Schwerkraft, unvorteilhaft oder unmöglich ist, zum Beispiel aufgrund baulicher und/oder prozesstechnischer Gegebenheiten an bzw. in der Kabelkonfektioniervorrichtung. Ein nicht abgestütztes Kabelende neigt insbesondere während eines Vorschubvorganges zum Verbiegen (Ausbrechen), was zu einem ungenaueren Konfektionierungsprozess führen kann. Es besteht ein Bedarf an einer Verbesserung der Genauigkeit eines Konfektionierungsprozesses in Zusammenhang mit der Nutzung einer Kabelkonfektioniervorrichtung.

### UMRISS DER ERFINDUNG

Es werden eine Kabelkonfektioniervorrichtung gemäß Anspruch 1 und ein Verfahren gemäß Anspruch 15 angegeben. Vorteilhafte Ausführungsformen sind in den Unteransprüchen und/oder nachfolgend genannt.

Gemäß einem Aspekt umfasst eine Kabelkonfektioniervorrichtung zum Konfektionieren von Kabeln eine Vorschubeinheit und eine Kabel-Stützeinrichtung. Die Vorschubeinheit ist konfiguriert zum Vorschieben eines Vorratskabels entlang einer Längsrichtung des Vorratskabels über ein Ende der Vorschubeinheit hinaus in einen Bearbeitungsbereich hinein. Die Kabel-Stützeinrichtung umfasst zumindest einen vorderen Stützteil. Der vordere Stützteil ist konfiguriert zum Stützen des vorgeschobenen Vorratskabels. Die Kabel-Stützeinrichtung umfasst außerdem ein Stützteil-Bewegungssystem. Das Stützteil-Bewegungssystem ist konfiguriert zum Bewegen des vorderen Stützteils entlang der Längsachsrichtung über eine Stützteil-Wegstrecke von einer hinteren Position nahe der Vorschubeinheit mindestens bis in den Bearbeitungsbereich hinein zu einer vorderen Position. Der vordere Stützteil nimmt weniger als ein Drittel der Länge in Längsachsrichtung der Wegstrecke zwischen der hinteren und der vorderen Position ein. Beispielsweise nimmt der vordere Stützteil weniger als ein Viertel der Länge in Längsachsrichtung der Wegstrecke zwischen der hinteren und der vorderen Position ein.

Das Stützteil-Bewegungssystem ist also so konfiguriert, dass es den vorderen Stützteil entlang der Längsachsrichtung bewegen kann, und zwar verlaufend über eine Stützteil-Wegstrecke, die von der hinteren Position nahe der Vorschubeinheit zu der vorderen Position reicht.

Die vordere Position befindet sich an einem Ort, der von der Vorschubeinheit aus gesehen zumindest im Bearbeitungsbereich oder jenseits des Bearbeitungsbereichs liegt. Mit anderen Worten: Die vordere Position befindet sich nicht bereits an einem Ort, der vom vorgeschobenen Kabel auf seinem Weg zum Bearbeitungsbereich durchquert werden muss, sondern ab dem Bearbeitungsbereich oder von der Vorschubeinheit aus gesehen dahinter. Die hierin beschriebene Technik ist nicht darauf beschränkt, dass sich die vordere Position immer an demselben Ort befinden muss. Insbesondere kann es vorgesehen sein, dass im Verlauf eines Konfektionierungsprozesses der vordere Stützteil der Kabel-Stützeinrichtung mehrfach bewegt wird. Insbesondere kann es vorgesehen sein, dass der vordere Stützteil der Kabel-Stützeinrichtung im Verlauf eines Konfektionierungsprozesses mehrfach zu derselben oder auch zu unterschiedlichen vorderen Positionen bewegt wird.

Die hintere Position befindet sich an einem Ort, der von der Vorschubeinheit aus gesehen in deren Nähe liegt, zum Beispiel - aber ohne Einschränkung darauf - an die Vorschubeinheit angrenzt. Beispielsweise befindet sich die hintere Position an einem Ort, der von der Vorschubeinheit aus gesehen von der Vorschubeinheit um 10% oder weniger der Stützteil-Wegstrecke entfernt ist. Es kann auch sein, dass angrenzend an die Vorschubeinheit eine oder mehrere weitere Hilfsvorrichtungen angeordnet sind, zum Beispiel eine Längenmessvorrichtung wie beispielsweise ein Sensorrad. Für das Verständnis der hinteren Position werden solche Vorrichtungen hier als zur Vorschubeinheit zugehörig angesehen. Mit anderen Worten: In einem solchen Fall befindet sich die hintere Position beispielsweise an einem Ort, der von der Vorschubeinheit aus gesehen von der Kombination aus Vorschubeinheit und Hilfsvorrichtung(en) um 10% oder weniger der Stützteil-Wegstrecke entfernt ist.

Das vordere Stützteil kann insbesondere derart ausgebildet sein, dass es das vorgeschobene Kabel umhüllt.

Die Kabel-Stützeinrichtung ist somit sehr kompakt. Eine solche kompakte oder schlanke Lösung kann dazu beitragen, dass der vordere Stützteil zumindest zeitweise sehr nahe am oder sogar im Bearbeitungsbereich befinden kann und das Kabel auch dort sicher abstützen kann; dadurch, dass der vordere Stützteil auch wieder aus dem Bearbeitungsbereich in Richtung der Vorschubeinheit herausbewegt werden kann und dort aufgrund seiner Kompaktheit wenig Platz einnimmt, kann ein Bauteil das sich während des Konfektionierungsprozesses im Bearbeitungsbereich befinden kann - beispielsweise eine Schneideinheit und/oder eine Trenn-/Abisoliereinheit und/oder eine Crimppresse - von der Kabel-Stützeinrichtung unbeeinflusst betrieben werden.

Gleichzeitig wird die Möglichkeit, dass sich zumindest ein Teil des vorgeschobenen Kabels im Bereich zwischen dem Ende der Vorschubeinheit und der vorderen Position der Stützteil-Wegstrecke verbiegt, wirksam abgeschwächt oder verhindert. Beispielsweise wird ein Durchhängen und/oder Abknicken des vorderen Endes des Vorratskabels abgeschwächt oder verhindert. Beispielsweise stabilisiert die Kabel-Stützeinrichtung das vordere Ende des Vorratskabels während der Bearbeitung.

In Ausführungsformen ist der vordere Stützteil aus einem Kunststoffmaterial gebildet. In Ausführungsformen ist der vordere Stützteil aus einem Metallmaterial gebildet. Der vordere Stützteil kann auch Kunststoff- und Metallanteile aufweisen.

In Ausführungsformen ist das Stützteil-Bewegungssystem so konfiguriert, dass es einer Vorschubbewegung des Kabels zumindest teilweise folgt. Das Stützteil-Bewegungssystem kann ungefähr gleich schnell wie das vorgeschobene Kabel bewegt werden oder auch langsamer als das vorgeschobene Kabel bewegt werden. Beispielsweise weist die Kabel-Stützeinrichtung einen Antrieb zum Verschieben des vorderen Stützteils auf.

In Ausführungsformen ist die Vorschubeinheit konfiguriert zum Vorschieben des Vorratskabels entlang der Längsrichtung des Vorratskabels über das Ende der Vorschubeinheit hinaus und über den Bearbeitungsbereich hinaus, d. h. vom Ende der Vorschubeinheit aus gesehen jenseits des Bearbeitungsbereichs. Beispielsweise ist auf dieser Seite jenseits des Bearbeitungsbereichs ein weiteres Prozessbauteil angeordnet, beispielsweise ein Greifer (Übernahmegreifer), der konfiguriert ist zum Übernehmen des vorgeschobenen Kabels. Ein gestütztes Vorschieben nach jenseits des Bearbeitungsbereichs bringt das vordere Kabelende näher an das weitere Prozessbauteil heran. Dies kann dazu beitragen, die Prozessgenauigkeit zu verbessern.

In Ausführungsformen umfasst die Kabel-Stützeinrichtung weiter mindestens einen hinteren Stützteil. Der hintere Stützteil ist so ausgebildet, dass er einhergehend mit einer Verschiebung des vorderen Stützteils zumindest teilweise entlang der Längsrichtung verschoben wird. Beispielsweise ist der hintere Stützteil am vorderen Stützteil befestigt und wird mit diesem mitbewegt. Alternativ oder zusätzlich ist das Stützteil-Bewegungssystem zusätzlich konfiguriert zum Bewegen auch des hinteren Stützteils entlang der Längsachsrichtung, beispielsweise bis 80% oder weniger der Stützteil-Wegstrecke, insbesondere bis 60% oder weniger der Stützteil-Wegstrecke und vorzugsweise bis 50% oder weniger der Stützteil-Wegstrecke.

Bei einer Kabel-Stützeinrichtung mit dem vorderen Stützteil und dem mindestens einen hinteren Stützteil umfasst die Kabel-Stützeinrichtung mithin zwei oder mehr aufeinander folgende Stützteile.

In Ausführungsformen ist der hintere Stützteil aus einem Kunststoffmaterial gebildet. In Ausführungsformen ist der hintere Stützteil aus einem Metallmaterial gebildet. Der hintere Stützteil kann auch Kunststoff- und Metallanteile aufweisen.

Eine Zwei- oder Mehrteiligkeit der Kabel-Stützeinrichtung kann dazu beitragen, dass diese einen größeren Kompaktheitsgrad erzielt als bei einer einteiligen Ausbildung.

Der vordere Stützteil ist zumindest in der hinteren bzw. zurückgezogenen Position näher am Bearbeitungsbereich angeordnet als der hintere Stützteil. Der hintere Stützteil ist demnach näher an der Vorschubeinheit angeordnet als der vordere Stützteil. Der vordere Stützteil kann hierin auch als bearbeitungsbereichseitiger Stützteil bezeichnet sein. Der hintere Stützteil kann hierin auch als vorschubeinheitseitiger Stützteil bezeichnet sein.

Beispielsweise ist einer von dem vorderen und hinteren Stützteil der Kabel-Stützeinrichtung teleskopierbar ausgebildet. Teleskopieren, wie hierin verwendet, umfasst einen Vorgang, bei dem zwei oder mehr koaxial angeordnete Teile derart axial verschiebbar sind, dass sie sich zumindest teilweise überdecken, beispielsweise durch Ineinanderschieben.

In Ausführungsformen hat das vordere Stützteil um die Verschiebungsachse (d. h. im Wesentlichen entlang der Kabellängsachse) einen kreisrunden Querschnitt, und das mindestens eine hintere Stützteil hat um die Verschiebungsachse ebenfalls einen kreisrunden Querschnitt. Bei der teleskopierbaren Ausführung hat eines von dem vorderen Stützteil und dem hinteren Stützteil einen kleineren Durchmesser als das jeweils andere, so dass diese zumindest teilweise ineinander verschiebbar sind.

In Ausführungsformen umfasst die Kabel-Stützeinrichtung mithin ein entlang der Längsachse des Vorratskabels verschiebbares Rohr, beispielsweise ein Teleskoprohr

In Ausführungsformen umfasst die Kabel-Stützeinrichtung einen Greifer. Der Greifer kann beweglich in Relation zu der Längsachse des Vorratskabels gelagert sein.

In Ausführungsformen weist das hintere Stützteil mindestens zwei hintere Stützteil-Elemente auf, die jeweils um die Verschiebungsachse (d. h. im Wesentlichen entlang der Kabellängsachse) einen kreisrunden Querschnitt haben. Bei der teleskopierbaren Ausführung haben die hinteren Stützteil-Elemente jeweils unterschiedliche Durchmesser, so dass diese zumindest teilweise ineinander verschiebbar sind.

In Ausführungsformen hat das vordere Stützteil um die Verschiebungsachse (d. h. im Wesentlichen entlang der Kabellängsachse) einen kreisrunden Querschnitt, und das hintere Stützteil weist mindestens zwei hintere Stützteil-Elemente auf, die jeweils um die Verschiebungsachse (d. h. im Wesentlichen entlang der Kabellängsachse) einen kreisrunden Querschnitt haben. Bei der teleskopierbaren Ausführung haben das vordere Stützteil und die hinteren Stützteil-Elemente jeweils unterschiedliche Durchmesser, so dass diese zumindest teilweise ineinander verschiebbar sind.

Unterschiedliche Durchmesser, wie hierin verwendet, umfasst beispielweise ein Verjüngen der Durchmesser der entsprechenden aufeinanderfolgenden Teile aus den hinteren Stützteil-Elementen und ggf. dem vorderen Stützteil.

In Ausführungsformen umfasst der teleskopierbare Stützteil oder die teleskopierbaren Stützteile drei oder mehr Teleskopelemente.

In Ausführungsformen ist die Kabel-Stützeinrichtung so ausgebildet, dass das vorgeschobene Vorratskabel punktuell gestützt wird. Punktuell gestützt umfasst insbesondere, dass das vorgeschobene Vorratskabel nicht über die gesamte Stützteil-Wegstrecke flächig auf der Kabel-Stützeinrichtung aufliegt. Punktuell gestützt umfasst beispielsweise, dass das vorgeschobene Vorratskabels auf 80% oder weniger, insbesondere 50% oder weniger und vorzugsweise 30% oder weniger, der Stützteil-Wegstrecke auf der Kabel-Stützeinrichtung aufliegt (also von dieser gestützt wird).

Eine Konfiguration gemäß der Ausführungsform, wonach das vorgeschobene Vorratskabel punktuell gestützt wird, kann dazu beitragen, dass die Kabel-Stützeinrichtung besonders kompakt, insbesondere besonders schmal ausgebildet ist. Alternativ oder zusätzlich kann eine solche Konfiguration dazu beitragen, dass die vom Stützteil-Bewegungssystem bewegte Masse, insbesondere diejenige des vorderen Stützteils und ggf., so vorhanden, des hinteren Stützteils, verhältnismäßig gering ist, was die Prozessdynamik verbessern kann.

In Ausführungsformen ist eine Stütz-Gesamtlänge der von der Kabel-Stützeinrichtung gestützten Kabelregion während des Vorschiebens des vorgeschobenen Vorratskabels kleiner als der Abstand des vorderen Stützteils der Stützeinrichtung vom Ende der Vorschubeinheit. Die zu einem bestimmten Zeitpunkt während einer Bewegung des vorderen Stützteils - bezogen auf den vom vorderen Stützteil bereits zurückgelegten Teil der Stützteil-Wegstrecke - gestützte bzw. unterstützte Länge des Kabels ist also kleiner als diese bereits zurückgelegte Teilstrecke. Beispielsweise ist die Stütz-Gesamtlänge während eines Großteils der Zeit, zum Beispiel mehr als 90% der Zeit, während der Bewegung von der hinteren Position bis zur vorderen Position kleiner als der Abstand des vorderen Stützteils der Stützeinrichtung vom Ende der Vorschubeinheit.

In Ausführungsformen beträgt während des Durchquerens des Vorratskabels entlang der Stützteil-Wegstrecke die Stütz-Gesamtlänge weniger als 80%, insbesondere weniger als 60% und vorzugsweise weniger als 40% des Abstands des vorderen Stützteils der Stützeinrichtung vom Ende der Vorschubeinheit.

Der Abstand des vorderen Stützteils der Stützeinrichtung vom Ende der Vorschubeinheit, wie hierin verwendet, ist zum Beispiel die kürzeste Distanz zwischen der Fläche des vorderen Stützteils, die der Stützeinrichtung zugewandt ist, bis zum vorderen Ende der Vorschubeinheit.

In Ausführungsformen umfasst der hintere Stützteil der Stützeinrichtung ein gewundenes elastisches Element. Beispielsweise ist der hintere Stützteil insgesamt ein solches gewundenes elastisches Element. Ein gewundenes elastisches Element, wie hierin verwendet, umfasst beispielsweise eine Feder, wie z. B. eine Schraubenfeder. Das gewundene elastische Element ist beispielsweise aus einem Metallmaterial gebildet, darauf aber nicht beschränkt, und es kann auch aus einem Kunststoffmaterial gebildet sein. Das gewundene elastische Element kann insbesondere derart ausgebildet sein, dass es das vorgeschobene Kabel umhüllt.

Ein gewundenes elastisches Element kann dazu beitragen, dass die Kabel-Stützeinrichtung insgesamt kompakte, insbesondere schmale, Abmessungen aufweist.

In Ausführungsformen weist das gewundene elastische Element dann, wenn das vordere Stützteil der Stützeinrichtung den kleinstmöglichen Abstand vom Ende der Vorschubeinheit aufweist, eine Ausdehnung in Längsrichtung von weniger als 40 mm, insbesondere weniger als 30 mm und vorzugsweise weniger als 20 mm auf. Wie oben erwähnt, kann es sein, dass angrenzend an die Vorschubeinheit eine oder mehrere weitere Hilfsvorrichtungen angeordnet sind, zum Beispiel eine Längenmessvorrichtung wie beispielsweise ein Sensorrad. Für das Verständnis des kleinstmöglichen Abstands werden solche Vorrichtungen hier als zur Vorschubeinheit zugehörig angesehen. Mit anderen Worten: In einem solchen Fall weist gemäß dieser Ausführungsform das gewundene elastische Element dann, wenn das vordere Stützteil der Stützeinrichtung den kleinstmöglichen Abstand vom Ende der Kombination aus Vorschubeinheit und Hilfsvorrichtung(en) aufweist, eine Ausdehnung in Längsrichtung von weniger als 40 mm, insbesondere weniger als 30 mm und vorzugsweise weniger als 20 mm auf.

Beispielsweise ist das gewundene elastische Element, wenn sich der vordere Stützteil nahe beim Ende der Vorschubeinheit befindet, weniger als 30 mm oder weniger als 20 mm, z. B. ca. 10 mm lang. Wenn sich der vordere Stützteil an der vorderen Position befindet, ist in diesem Beispiel das gewundene elastische Element mehr als 90 mm lang, beispielsweise ca. 100 mm. Das vordere Stützteil legt beispielsweise eine Stützteil-Wegstrecke von mehr als 80 mm und weniger als 120 mm zurück, beispielsweise ca. 90 mm.

In Ausführungsformen ist das eine Ende des gewundenen elastischen Elements im Bereich des Endes der Vorschubeinheit befestigt, und das andere Ende des gewundenen elastischen Elements ist am vorderen Stützteil befestigt. Das Ausdehnen/Zusammenziehen des gewundenen elastischen Elements folgt dann der Bewegung des vorderen Stützteils durch das Stützteil-Bewegungssystem.

In Ausführungsformen umfasst die Kabelkonfektioniervorrichtung im Bearbeitungsbereich eine Bearbeitungseinheit. Eine Bearbeitungseinheit kann beispielsweise insbesondere eine Ablängeinheit und/oder eine Abisoliereinheit und/oder eine Schneideinheit sein. Die Bearbeitungseinheit ist konfiguriert zum Durchführen mindestens eines Prozessschrittes im Konfektionierungsprozess.

Bei dem Konfektionierungsprozess kann das Kabel beispielsweise auf eine vorgegebene Länge abgeschnitten und/oder abisoliert werden. Ein Kontaktteil kann an einem Kabelende angebracht werden, beispielsweise über einen Crimpvorgang. Es ist erforderlich, dass das Kontaktteil schnell und präzise am Kabelende angebracht wird.

Das Vorratskabel kann nach einer bestimmten Länge abgeschnitten werden, um ein abgetrenntes Kabel und ein Restkabel (verkürztes, beschnittenes Vorratskabel) bereitzustellen. Das abgetrennte Kabel und/oder das Restkabel kann weiterbearbeitet werden. Beispielweise können die jeweiligen Kabelenden des abgetrennten Kabels und/oder des Restkabels gecrimpt werden.

Kabelkonfektioniervorrichtungen können als Inline-Maschinen ausgeführt sein. Insbesondere können Kabelkonfektioniervorrichtungen als zentrisch schließende Inline-Maschinen ausgeführt sein.

Bei einer Inline-Maschine kann das Vorratskabel durch eine Trennvorrichtung durchtrennt werden. Eine oder mehrere Bearbeitungseinheiten der Inline-Maschine können zu dem Vorratskabel und/oder dem Restkabel und/oder zu dem abgetrennten Kabel geführt werden, um diese zu bearbeiten. Insbesondere können die Bearbeitungseinheiten der Inline-Maschine zu dem vorderen Ende des Restkabels und/oder dem hinteren Ende des abgetrennten Kabels geführt werden, um diese zu bearbeiten. Eine Bearbeitung des vorderen Endes des Restkabels und/oder des hinteren Endes des abgetrennten Kabels kann ermöglicht sein, ohne dass eine Bewegung des vorderen Endes des Restkabels und/oder des hinteren Endes des abgetrennten Kabels aus der Längsachse des Vorratskabels erfolgt.

Bei einer Kabelkonfektioniervorrichtung kann beispielsweise ein Vorratskabel von einem Kabelvorrat in eine Kabelkonfektioniervorrichtung gespeist werden. Das Vorratskabel kann eine Richteinheit durchlaufen, um das Vorratskabel zu begradigen und etwaige Biegungen und/oder Knicke zu entfernen. Eine Vorschubeinheit kann genutzt werden, um das Vorratskabel entlang seiner Längsachse vorwärts und/oder rückwärts zu bewegen. Die Kabelkonfektioniervorrichtung kann eine Längenmessvorrichtung aufweisen, die vor und/oder hinter der Vorschubeinheit angeordnet sein kann. Die Längenmessvorrichtung kann dazu angeordnet und eingerichtet sein, um die Länge des zugeführten Vorratskabels zu bestimmen. Die Längenmessvorrichtung kann dazu angeordnet und eingerichtet sein, um die Länge des abgetrennten Kabels zu bestimmen. Eine Längenmessvorrichtung zur Bestimmung der Länge eines Kabels kann auch an einer anderen Position der Kabelkonfektioniervorrichtung vorgesehen sein.

Die entlang der Längsachse des Vorratskabels bewegliche Kabel-Stützeinrichtung kann dazu vorgesehen sein, das Vorratskabel von der Vorschubeinheit zu einem Abführband zu führen. Hierzu ist die Kabel-Stützeinrichtung entlang der Längsachse des Vorratskabel in Richtung des Abführbands beweglich. Das vordere Ende des Vorratskabels kann so präzise an das Abführband und/oder den Übernahmegreifer (Fixierungsgreifer) übergeben werden. Anschließend kann zumindest der vordere Teil der Kabel-Stützeinrichtung entlang der Längsachse des Vorratskabels in Richtung der Vorschubeinheit zurückbewegt werden. Nach dem Zurückbewegen der Stützeinrichtung kann das Vorratskabel in dem Bearbeitungsbereich angeordnet sein. In dem Bearbeitungsbereich kann das Vorratskabel zugänglich für eine oder mehrere Bearbeitungseinheiten sein. In diesem Bereich kann das Vorratskabel durchtrennt werden.

Die Kabel-Stützeinrichtung kann dazu ausgebildet sein, das vordere Ende des Vorratskabels an das Abführband und/oder einen Fixierungsgreifer zu übergeben.

Durch das Durchtrennen kann ein hinteres Ende des abgetrennten Kabels und ein vorderes Ende des Restkabels entstehen. Bei dem Durchtrennen kann das Vorratskabel von einem Fixierungsgreifer gegriffen werden, insbesondere in einem Bereich, in dem nach dem Schneiden das hintere Ende des abgetrennten Kabels entsteht. Dies kann die Bearbeitung des hinteren Endes des abgetrennten Kabels und/oder das Durchtrennen des Vorratskabels erleichtern. Das vordere Ende des Restkabels kann sich im Bearbeitungsbereich befinden. Das hintere Ende des abgetrennten Kabels kann sich im Bearbeitungsbereich befinden. Das vordere Ende des Restkabels und/oder das hintere Ende des abgetrennten Kabels kann im Bearbeitungsbereich bearbeitet werden. Das vordere Ende des Restkabels kann durch die Stützeinrichtung während der Bearbeitung des vorderen Endes des Restkabels in Position gehalten werden. Nach dem Bearbeiten des abgetrennten Kabels kann mit einem Abführgreifer das bearbeitete abgetrennte Kabel aus der Längsachse des Vorratskabels bewegt werde. Der Abführgreifer kann das abgetrennte Kabel senkrecht und/oder parallel zu der Achse des Vorratskabels bewegen.

Nicht alle im vorherig aufgeführten Beispiel erwähnten Bearbeitungseinheiten (Konfektioniereinheiten) sind essenziell für eine Kabelkonfektioniervorrichtung. Beispielsweise braucht eine Längenmessvorrichtung nicht in jeder Kabelkonfektioniervorrichtung vorhanden zu sein. In einer Ausführungsform ist es möglich, dass das Kabel nicht aus einem Kabelvorrat stammt, sondern ein abgetrenntes Kabel direkt aus einer vorherigen Maschine an die Kabelkonfektioniervorrichtung übergeben wird. In einer Ausführungsform kann das abgetrennte Kabel (und/oder das bearbeitete abgetrennte Kabel) an eine weitere Maschine zur weiteren Bearbeitung übergeben werden.

Bei einer Schwenkarm-Maschine kann das vordere Ende des Restkabels und/oder das hintere Ende des abgetrennten Kabels aus der Längsachse des Vorratskabels zu einer oder mehreren Bearbeitungseinheiten bewegt werden. Die jeweiligen Kabelenden können außerhalb der Längsachse des Vorratskabels bearbeitet werden. Das vordere Ende des Restkabels und/oder das hintere Ende des abgetrennten Kabels kann/können mehreren Bearbeitungseinheiten, insbesondere nacheinander, zugeführt werden.

Bei einer Inline-Maschine kann das vordere Ende des Restkabels und das hintere Ende des abgetrennten Kabels bei der Bearbeitung entlang der Längsachse des Vorratskabels angeordnet bleiben. Insbesondere muss kein Herausbewegen (Herausschwenken) aus der Längsachse des Vorratskabels erforderlich sein. Bei einer Inline-Maschine kann eine Bearbeitung des vorderen Endes des Restkabels und/oder des hinteren Endes des abgetrennten Kabels ermöglicht sein, während alle diese Enden in der Achse angeordnet sind. Diese Enden verbleiben in der Achse, bis die Bearbeitungseinheiten (Konfektioniereinheiten) die Bearbeitungsschritte abgeschlossen haben und das abgetrennte Kabel bereit zum Weitertransport ist.

Die Bearbeitungseinheiten zum Bearbeiten des vorderen Endes des Restkabels und/oder des hinteren Endes des abgetrennten Kabels können im Bearbeitungsbereich um die Längsachse des Vorratskabels angeordnet sein. Dies kann die Bearbeitung der jeweiligen Kabelenden ohne ein Schwenken der Kabelenden ermöglichen. Ein Vorteil kann sein, dass ein Verbiegen der Kabelenden vermieden werden kann.

Die Inline-Maschine kann im Vergleich zu einer Schwenkarm-Maschine schneller betrieben werden, da das vordere Ende des Restkabels und/oder das hintere Ende des abgetrennten Kabels nicht aus der Längsachse des Vorratskabels bewegt zu werden braucht. Ein Vorteil kann eine Beschleunigung des Konfektionsprozesses sein. Bei der Inline-Maschine können die Bearbeitungseinheiten das vordere Ende des Restkabels und/oder das hintere Ende des abgetrennten Kabels in der Längsachse des Vorratskabels bearbeiten. Vorteilhaft kann Platz gespart werden, da jede Bearbeitungseinheit das Restkabel und/oder das abgetrennte Kabel in der Längsachse des Vorratskabels bearbeiten kann. Ein Vorteil kann sein, dass mechanische Prozesse unterschiedlicher Bearbeitungseinheiten durch einen gemeinsamen Mechanismus getätigt werden können. Eine Bearbeitungseinheit zur Bearbeitung des vorderen Endes des Restkabels kann weiterhin zur Bearbeitung des hinteren Endes des abgetrennten Kabels ausgebildet sein. Die Komplexität der Kabelkonfektioniervorrichtung kann reduziert sein.

Die Kabelkonfektioniervorrichtung kann eine Bearbeitungseinheit (Konfektioniereinheit) aufweisen. Die Kabelkonfektioniervorrichtung kann eine Vielzahl an Bearbeitungseinheiten aufweisen.

Eine Bearbeitungseinheit kann eine Trennvorrichtung zum Durchtrennen des Kabels sein. Eine Bearbeitungseinheit kann eine Abisoliereinheit zum Abisolieren des vorderen Endes des Restkabels und/oder zum Abisolieren des hinteren Endes des abgetrennten Kabels sein.

Eine Bearbeitungseinheit kann eine Crimpeinheit zum Crimpen des vorderen Endes des Restkabels (beispielsweise zum Anbringen eines Kontaktteils am vorderen Ende des Restkabels) und/oder zum Crimpen des hinteren Endes des abgetrennten Kabels (beispielsweise zum Anbringen eines Kontaktteils am hinteren Ende des abgetrennten Kabels) sein.

Eine Bearbeitungseinheit kann eine Isoliereinheit zum Isolieren des vorderen Endes des Restkabels und/oder zum Isolieren des hinteren Endes des abgetrennten Kabels sein. Eine Bearbeitungseinheit kann eine Crimp-Qualitätskontrolleinheit zum Überprüfen der Crimpverbidung sein. Eine Bearbeitungseinheit kann eine Isolations-Qualitätskontrolleinheit zum Überprüfen der Isolierung sein.

Die jeweilige Bearbeitungseinheit kann ein jeweiliges Werkzeug aufweisen. Das jeweilige Werkzeug kann bewegbar sein. Eine Bearbeitungseinheit kann ein linear bewegbares Werkzeug aufweisen. Eine Bearbeitungseinheit kann ein schwenkbares Werkzeug aufweisen. Die Bearbeitungseinheiten von Inline-Maschinen können anhand der ausgeführten Bewegungsform des jeweiligen Werkzeuges einer Bearbeitungseinheit unterschieden werden. Eine Bewegungsform kann eine lineare Bewegung sein. Eine Bewegungsform kann eine Schwenkbewegung sein.

Die Schwenkbewegung kann um eine Achse parallel zur Längsachse des Vorratskabels erfolgen. Die Linearbewegung kann entlang einer Achse senkrecht zur Längsachse des Vorratskabels erfolgen.

Eine Bearbeitungseinheit kann eine Mehrzahl an Werkzeugen aufweisen. Jedes Werkzeug der Mehrzahl an Werkzeugen einer Bearbeitungseinheit kann eine unterschiedliche Bewegungsform ausführen. In einer Ausführungsform können mehrere Werkzeuge der Vielzahl an Werkzeugen dieselbe Bewegungsform ausführen. In einer Ausführungsform können alle Werkzeuge der Bearbeitungseinheit dieselbe Bewegungsform ausführen. Die Bearbeitungseinheit kann zumindest ein Werkzeug aufweisen, das stationär (ortsfest; unbewegt) ist.

Eine Inline-Maschine kann eine Bearbeitungseinheit aufweisen, die für eine zentrische Bewegung ausgebildet ist. Eine Inline-Maschine kann eine Bearbeitungseinheit aufweisen, die für eine zentrische lineare Bewegung ausgebildet ist. Beispielsweise kann die Bearbeitungseinheit zentrisch schließend ausgebildet sein. Eine Inline-Maschine kann eine Bearbeitungseinheit aufweisen, die ein Werkzeug aufweist, das für eine zentrische Bewegung ausgebildet ist. Eine Inline-Maschine kann eine Bearbeitungseinheit aufweisen, die ein Werkzeug aufweist, das für eine zentrische lineare Bewegung ausgebildet ist. Beispielsweise kann das Werkzeug zentrisch schließend ausgebildet sein.

Eine zentrisch schließende Inline-Maschine kann mindestens eine zentrisch schließende Bearbeitungseinheit aufweisen. Eine zentrisch schließende Inline-Maschine kann mindestens eine zentrisch schließende Crimpeinheit aufweisen. Eine zentrisch schließende Inline-Maschine kann im Vergleich zu einer Schwenkarm-Maschine und/oder einer nicht zentrisch schließenden Inline-Maschine essenziell unterschiedlich aufgebaut sein. Beispielsweise kann eine zentrisch schließende Inline-Maschine mindestens ein erstes System und ein zweites System umfassen, wobei das erste System ein erstes Werkzeug bewegt und das zweite System ein zweites Werkzeug bewegt. Das erste System und das zweite System können gekoppelt sein, um ein zentrisches Schließen des ersten Werkzeugs und des zweiten Werkzeugs zu ermöglichen. Eine zentrisch schließende Inline-Maschine ist im Vergleich zu einer Schwenkarm-Maschine und/oder einer nicht zentrisch schließenden Inline-Maschine ein anderer Typ von Kabelbearbeitungsmaschine und vollkommen unterschiedlich konzipiert, da sich die Kabelführung und die gesamte Konstruktion der Maschine nicht vergleichen lässt. Insbesondere kann die zentrisch schließende Inline-Maschine das erste System und das zweite System umfassen. Insbesondere kann die zentrisch schließende Inline-Maschine das erste System und das zweite System und eine Kopplung des ersten und des zweiten Systems umfassen.

In einer Ausführungsform kann eine Bearbeitungseinheit zentrisch schließen, wenn sich mindestens ein Werkzeug, insbesondere zwei Werkzeuge, zur Bearbeitung des Vorratskabels, des Restkabels und/oder des abgetrennten Kabels in Richtung der Längsachse des Vorratskabels bewegen, um das Kabelende zu bearbeiten.

In einer Ausführungsform kann eine Bearbeitungseinheit zentrisch schließend sein, wenn sich mindestens zwei Werkzeuge der Bearbeitungseinheit zur Bearbeitung des Vorratskabels, des Restkabels und/oder des abgetrennten Kabels, insbesondere gleichzeitig, in den Kabelquerschnitt bewegen. Der Kabelquerschnitt kann dem Kabelquerschnitt des unbearbeiteten Vorratskabels und/oder des unbearbeiteten Restkabels und/oder des unbearbeiteten, abgetrennten Kabels entsprechen.

In einer Ausführungsform kann eine Bearbeitungseinheit zentrisch schließend sein, wenn sich mindestens zwei Werkzeuge der Bearbeitungseinheit zur Bearbeitung des Vorratskabels, des Restkabels und/oder des abgetrennten Kabels, insbesondere gleichzeitig, zur Bearbeitung des Vorratskabels, des Restkabels und/oder des abgetrennten Kabel an das Vorratskabel, das Restkabel und/oder das abgetrennte Kabel herangeführt werden.

Bei einer zentrischen Bewegung können sich zwei gegenüberliegende Werkzeuge in Relation zur Längsachse des Vorratskabels bewegen. Bei einer zentrischen Bewegung können sich zwei gegenüberliegende Werkzeuge in die Richtung der Längsachse des Vorratskabels bewegen. Bei einer zentrischen Bewegung können sich zwei gegenüberliegende Werkzeuge in Relation zur Längsachse des Vorratskabels voneinander entfernen.

Ein Vorteil kann sein, dass bei der Bearbeitung Kräfte gleichmäßiger auf das Vorratskabel, das Restkabel und/oder das abgetrennte Kabel wirken können. Ein Abknicken des Vorratskabels, des Restkabels und/oder des abgetrennten Kabels kann vorteilhaft verhindert sein. Die Qualität des Konfektionierens kann verbessert sein.

Zentrisch schließende Bearbeitungseinheiten können den Vorteil haben, dass alle Werkzeuge der Bearbeitungseinheit während einer Bewegung des Vorratskabels, des Restkabels und/oder des abgetrennten Kabels beabstandet von der Längsachse des Vorratskabels positioniert werden können. Hierdurch kann vorteilhaft verhindert werden, dass das Vorratskabel, das Restkabel und/oder das abgetrennte Kabel in Kontakt mit einem Werkzeug der Bearbeitungseinheit kommt. Vorteilhaft kann eine Beschädigung an dem Vorratskabel, dem Restkabel und/oder dem abgetrennten Kabel verhindert werden.

Im Folgenden werden unterschiedliche Bearbeitungseinheiten beispielhaft beschrieben. Die Ausführungsfomen der Bearbeitungseinheiten sind lediglich als Beispiele zu verstehen. Eine erfindungsgemäße Kabelkonfektioniervorrichtung kann zumindest eine der beispielhaft beschriebenen Bearbeitungseinheiten aufweisen.

Eine Kabelkonfektioniervorrichtung kann eine Trennvorrichtung aufweisen. Die Trennvorrichtung kann mindestens ein Messer aufweisen. Die Trennvorrichtung kann insbesondere ein erstes Messer und ein zweites Messer aufweisen. In einer Ausführungsform kann die Trennvorrichtung ein erstes Messer und ein dem ersten Messer gegenüberliegendes zweites Messer aufweisen.

Das Messer kann eine V-förmige Schneide aufweisen. Das Messer kann als Rundmesser ausgebildet sein. Das Messer kann eine schräge Schneide aufweisen.

Zum Durchtrennen des Vorratskabels können das erste Messer und das zweite Messer in einer Schwenkbewegung zentrisch zu der Längsachse des Vorratskabels geführt werden. Zum Durchtrennen des Vorratskabels können das erste Messer und das zweite Messer in einer Schwenkbewegung um eine Achse parallel zu der Längsachse des Vorratskabels zu der Längsachse des Vorratskabels geführt werden. Zum Durchtrennen des Vorratskabels können das erste Messer und das zweite Messer in einer Linearbewegung zentrisch zu der Längsachse des Vorratskabels geführt werden. Das erste Messer und das zweite Messer können wie bei einer Schere aneinander vorbeigeführt werden, um das Vorratskabel zu durchtrennen. Ein Messer mit einer V-förmigen Schneide kann den Vorteil haben, dass ein seitliches Verrutschen des Vorratskabels verhindert werden kann.

Die zentrische Bewegung des ersten Messers und des zweiten Messers kann derart ausführbar sein, dass sich die tangentialen Kräfte, die auf das Vorratskabel während des Durchtrennens wirken, gegenseitig aufheben oder zumindest reduziert werden.

Das Messer und/oder die Messer der Trennvorrichtung können derart positionierbar sein, dass sie von dem Vorratskabel, dem Restkabel und/oder dem abgetrennten Kabel beabstandet sind, während das Vorratskabel, das Restkabel und/oder das abgetrennte Kabel entlang der Längsachse des Vorratskabels bewegt wird/werden. Ein Vorteil kann sein, dass dadurch eine Reibung des Messers und/oder der Messer an dem Vorratskabel, dem Restkabel und/oder dem abgetrennten Kabel beispielsweise an der Kabelisolierung, vermieden werden kann.

In einer Ausführungsform kann die Trennvorrichtung ein Messer und einen dem Messer gegenüberliegenden mechanischen Widerstand aufweisen. Der mechanische Widerstand kann zentrisch bewegbar sein. Insbesondere können das Messer und der mechanische Widerstand zentrisch bewegbar sein. Der mechanische Widerstand kann dazu ausgebildet sein, die Tangentialkraft des Messers auszugleichen, die beim Durchtrennen des Vorratskabels auftreten kann.

Eine Kabelkonfektioniervorrichtung kann eine Abisoliereinheit aufweisen. Die Abisoliereinheit kann mindestens ein Messer aufweisen. Die Abisoliereinheit kann insbesondere ein erstes Messer und ein zweites Messer aufweisen. In einer Ausführungsform kann die Abisoliereinheit ein erstes Messer und ein dem ersten Messer gegenüberliegendes zweites Messer aufweisen. Das Messer kann eine V-förmige Schneide aufweisen. Das Messer kann als Rundmesser ausgebildet sein. Das Messer kann eine schräge Schneide aufweisen.

Zum Abisolieren des Restkabels und/oder des abgetrennten Kabels können das erste Messer und das zweite Messer in einer Schwenkbewegung zentrisch zu der Längsachse des Vorratskabels geführt werden. Zum Abisolieren des Restkabels und/oder des abgetrennten Kabels können das erste Messer und das zweite Messer in einer Linearbewegung zentrisch zu der Längsachse des Vorratskabels geführt werden.

Das erste Messer und das zweite Messer können wie bei einer Schere aneinander herangeführt werden, um die Isolation des Restkabels und/oder des abgetrennten Kabels zumindest teilweise einzuschneiden und/oder zu durchtrennen. Ein Messer mit einer V-förmigen Schneide kann den Vorteil haben, dass ein seitliches Verrutschen des Vorratskabels verhindert werden kann. Ein Vorteil kann sein, dass ein größerer Teil der Isolation eingeschnitten und/oder durchtrennt werden, ohne den Leiter des Restkabels und/oder des abgetrennten Kabels zu beschädigen. Durch das zumindest teilweise Einschneide und/oder Durchtrennen kann die Isolation in einen zu konservierenden Bereich und einen Überstand trennbar sein. Nach dem Einschneiden und/oder dem zumindest teilweisen Durchtrennen der Isolation können das erste Messer und das zweite Messer in der Position verharren, während das Restkabel und/oder das abgetrennte Kabel entlang der Längsachse des Vorratskabels bewegt werden kann. Der Überstand der Isolation kann hierbei durch die Messer an der Bewegung gehindert werden und der Leiter des Kabels kann aus dem Überstand der Isolation herausgezogen werden. Insbesondere für dicke Kabel (beispielsweise dicke Vorratskabel) kann es wichtig sein, dass die Form der Messer, insbesondere der Schneiden der Messer, korrespondierend zu der Kabelform ist, um einen möglichst großen Teil der Isolierung des Kabels einzuschneiden und/oder zu durchtrennen ohne den Leiter des Kabels zu beschädigen.

In einer Ausführungsform kann die Abisoliereinheit einen Rundschneider aufweisen. Der Rundschneider kann derart angeordnet und ausgebildet sein, die Isolation des Kabels entlang seines gesamten Umfangs einzuschneiden und/oder zu durchtrennen.

In einer Ausführungsform kann die Kabelkonfektioniervorrichtung eine Trenn- und Abisoliereinheit aufweisen. Die Trenn- und Abisoliereinheit kann zum Durchtrennen des Vorratskabels und zum Abisolieren des Restkabels und/oder des abgetrennten Kabels ausgebildet sein. In einer Ausführungsform kann die Trennvorrichtung weiterhin zum Abisolieren ausgebildet sein. In einer Ausführungsform kann die Abisoliereinheit weiterhin zum Durchtrennen des Vorratskabels ausgebildet sein. Ein Vorteil kann sein, dass Platz im Arbeitsbereich eingespart werden kann. Verschleißteile können vorteilhaft reduziert sein.

Die Kabelkonfektioniervorrichtung kann eine Vielzahl an Abisoliereinheiten aufweisen. Die Kabelkonfektioniervorrichtung kann eine erste Abisoliereinheit und eine zweite Abisoliereinheit aufweisen. Beispielsweise kann die erste Abisoliereinheit dazu eingerichtet und derart positioniert oder positionierbar sein, das vordere Ende des Restkabels zu bearbeiten, insbesondere abzuisolieren. Die zweite Abisoliereinheit kann dazu eingerichtet und derart positioniert oder positionierbar sein, das hintere Ende des abgetrennten Kabels zu bearbeiten, insbesondere abzuisolieren. Dies kann eine Beschleunigung des Konfektioniervorganges ermöglichen.

In einer Ausführungsform kann die Kabelkonfektioniervorrichtung die Trennvorrichtung, die erste Abisoliereinheit und die zweite Abisoliereinheit aufweisen. In einer vorteilhaften Ausführungsform können das erste Messer der Trennvorrichtung, das erste Messer der ersten Abisoliereinheit und das erste Messer der zweiten Abisoliereinheit durch einen gemeinsamen Aktuator gemeinsam bewegbar sein. In einer vorteilhaften Ausführungsform können das zweite Messer der Trennvorrichtung, das zweite Messer der ersten Abisoliereinheit und das zweite Messer der zweiten Abisoliereinheit durch einen gemeinsamen Aktuator gemeinsam bewegbar sein.

Bei dem Crimpvorgang, beispielsweise durch die Betätigung der Crimpeinheit, können das erste Crimpwerkzeug (beispielsweise der Crimper) und das zweite Crimpwerkzeug (beispielsweise der Amboss) Kraft auf ein Kontaktteil ausüben, um dieses unelastisch zu verformen. Ein abisoliertes Kabelende (insbesondere das abisolierte vordere Kabelende des Restkabels und/oder das abisolierte hintere Kabelende des abgetrennten Kabels) kann relative so zu dem Kontaktteil positionierbar sein, dass bei dem Crimpvorgang das Kontaktteil derartig verformt wird, dass das verformte Kontaktteil (gecrimptes Kontaktteil) den Leiter und/oder den Isolator des Kabels (insbesondere das Restkabel und/oder das abgetrennte Kabel) mechanisch einklemmt.

Der Teil des Kontaktteils, der dazu ausgebildet ist, den Leiter einzuklemmen, kann als Drahtcrimp bezeichnet sein. Der Teil des Kontaktteils, der dazu ausgebildet ist, den Isolator einzuklemmen, kann als Isolationscrimp bezeichnet sein. Der Drahtcrimp kann den elektrischen Kontakt zwischen dem Leiter des Kabels und dem gecrimpten Kontaktteil herstellen. Der Isolationscrimp kann eine zusätzliche Stabilität des Formschlusses erzeugen. Eine Vielzahl an Kontaktteilen kann an einem Trägerstreifen befestigt sein. Während des Crimpvorgangs kann das Kontaktteil durch die Crimpeinheit von dem Trägerstreifen getrennt werden. Eine Trägerstreifenzufuhr kann dazu eingerichtet sein, den Trägerstreifen derart zu bewegen, dass ein ungecrimptes Kontaktteil vor dem Crimpvorgang zwischen dem Amboss und dem Crimper positioniert wird.

Eine Kabelkonfektioniervorrichtung kann eine Qualitätskontrolleinheit aufweisen. Die Qualitätskontrolleinheit kann dazu eingerichtet sein, die Qualität des Vorratskabels, die Qualität des abgetrennten Kabels, die Qualität des Restkabels, die Bearbeitung des vorderen Endes des Restkabels und/oder die Bearbeitung des hinteren Endes des abgetrennten Kabels zu prüfen. Die Qualitätskontrolle kann beispielsweise eine Sichtkontrolle per Bildaufnahme, gegebenenfalls unterstützt durch künstliche Intelligenz, umfassen. Die Qualitätskontrolle kann eine elektrische Messung, beispielsweise eine Widerstandsmessung, und/oder eine mechanische Messung, beispielsweise eine Zugsteifigkeitsmessung, umfassen. Die Qualitätskontrolleinheit kann einen optischen Sensor aufweisen. Die Qualitätskontrolleinheit kann eine optische Kamera aufweisen. Die Qualitätskontrolleinheit kann einen mechanischen Sensor aufweisen. Die Qualitätskontrolleinheit kann einen elektrischen Sensor aufweisen.

Eine Kabelkonfektioniervorrichtung kann einen Abzugsgreifer aufweisen. Der Abzugsgreifer kann dazu eingerichtet sein, das abgetrennte Kabel nach der Beendigung der Bearbeitung des abgetrennten Kabels aus der Längsachse des Vorratskabels zu bewegen. Dies kann verhindern, dass nach der Beendigung der Bearbeitung des abgetrennten Kabels das abgetrennte Kabel in Kontakt kommt mit dem Vorratskabel (und/oder dem Restkabel), welches zur Konfektionierung des nächsten Kabels entlang der Längsachse des Vorratskabels in Richtung des abgetrennten Kabels transportiert wird.

Eine Kabelkonfektioniervorrichtung kann eine Vorschubeinheit aufweisen. Die Vorschubeinheit kann dazu ausgebildet sein, um das Vorratskabel und/oder das Restkabel entlang der Längsachse des Vorratskabels zu bewegen.

Mithilfe der Vorschubeinheit kann beispielsweise das Vorratskabel vom Vorrat in die Kabelkonfektioniervorrichtung bewegt werden. Eine Vorschubeinheit kann beispielsweise in Kombination mit einer Abisoliereinheit genutzt werden, insbesondere um das Kabel vom Überstand der Isolation zu trennen.

Eine Kabelkonfektioniervorrichtung kann eine Längenmessvorrichtung aufweisen. Eine Längenmessvorrichtung kann dazu ausgebildet sein, eine Distanz, um die eine Vorschubeinheit ein Kabel (insbesondere das Vorratskabel, das Restkabel und/oder das abgetrennte Kabel) bewegt hat, zu bestimmen. Die Längenmessvorrichtung kann dazu eingerichtete sein, die Länge eines Kabels (insbesondere des Vorratskabels, des Restkabels und/oder des abgetrennten Kabels) zu bestimmen. Eine Längenmessvorrichtung kann beispielsweise eine Messrolle aufweisen. In einer Ausführungsform kann die Längenmessvorrichtung ausgebildet sein die Länge des Kabels (insbesondere des Vorratskabels, des Restkabels und/oder des abgetrennten Kabels) durch den Vorschub der Vorschubeinheit zu bestimmen.

Für den reibungslosen Betrieb einer Inline-Maschine kann es von Vorteil sein, wenn das Werkzeug oder die Werkzeuge der Bearbeitungseinheiten justiert werden können. Beispielsweise kann die Qualität der Bearbeitung eines Kabelendes durch eine Bearbeitungseinheit davon abhängen, ob das Werkzeug oder die Werkzeuge der Bearbeitungseinheit auf die Längsachse des Vorratskabels und/oder den Durchmesser des Vorratskabels justiert ist/sind. Je nach Bearbeitungseinheit kann es ausreichend sein, dass nur ein Werkzeug der Bearbeitungseinheit justierbar ist. Beispielsweise kann es ausreichend sein, den Crimper einer Crimpeinheit zu justieren ohne den Amboss der Crimpeinheit zu justieren.

Gemäß einem Aspekt betreffend ein Verfahren zum Konfektionieren eines Kabels unter Verwendung einer hierin beschriebenen Kabelkonfektioniervorrichtung umfasst das Verfahren ein Vorschieben - mittels der Vorschubeinheit - eines Vorratskabels entlang einer Längsachsrichtung des Vorratskabels über das Ende der Vorschubeinheit hinaus in den Bearbeitungsbereich hinein, während des Vorschiebens ein Stützen des vorgeschobenen Kabels unter Verwendung der Kabel-Stützeinrichtung, wobei das Stützteil-Bewegungssystem das vordere Stützteil einhergehend mit einer Vorschubbewegung des vorgeschobenen Kabels mitbewegt, ein Halten - insbesondere Greifen - des vorgeschobenen Kabels auf der dem Bearbeitungsbereich aus Richtung des Endes der Vorschubeinheit gegenüberliegenden Seite, ein Zurückbewegen des vorderen Stützteils aus dem Bearbeitungsbereich hinaus, und ein Bearbeiten - insbesondereTrennen und/oder Abisolieren und/oder Crimpen - des Kabels im Bearbeitungsbereich.

### KURZE BESCHREIBUNG DER ZEICHNUNGEN

Im Folgenden werden Aspekte der Erfindung beispielhaft anhand von Zeichnungen beschrieben. Die Zeichnungen zeigen:
Fig. 1 eine schematische Darstellung einer beispielhaften Kabelkonfektioniervorrichtung;
Fig. 2 ein beispielhaftes Diagramm von Arbeitsschritten zur Konfektionierung eines Kabels durch eine Kabelkonfektioniervorrichtung;
Fig. 3 eine beispielhafte Trenn- und Abisoliereinheit;
Fig. 4 eine beispielhafte Crimpeinheit;
Fig. 5a einen beispielhaften Trägerstreifen;
Figs. 5b und 5c jeweils ein Kabelende nach einem beispielhaften Konfektionieren;
Fig. 6 eine Ansicht eines Ausschnitts B der Kabelkonfektioniervorrichtung aus Fig. 1;
Fig. 7 einen Ausschnitt der Kabelkonfektioniervorrichtung analog zu Fig. 6, mit einer anderen Position eines vorderen Stützteils einer Kabel-Stützeinrichtung; und
Fig. 8 einen Ausschnitt der Kabelkonfektioniervorrichtung analog zu Fig. 6, mit einer anderen Ausführungsform eines hinteren Teils einer Kabel-Stützeinrichtung.

### DETAILLIERTE BESCHREIBUNG

Im Folgenden wird im Detail auf die verschiedenen Ausführungsformen Bezug genommen, von denen ein oder mehrere Beispiele in jeder Abbildung dargestellt sind. Jedes Beispiel dient der Erläuterung und ist nicht als Einschränkung zu verstehen. So können beispielsweise Merkmale, die als Teil einer Ausführungsform oder eines Aspekts abgebildet oder beschrieben sind, bei oder in Verbindung mit einer anderen Ausführungsform oder einem anderen Aspekt verwendet werden, um eine weitere Ausführungsform oder einen weiteren Aspekt zu erhalten. Es ist beabsichtigt, dass die vorliegende Offenbarung solche Modifikationen und Variationen umfasst.

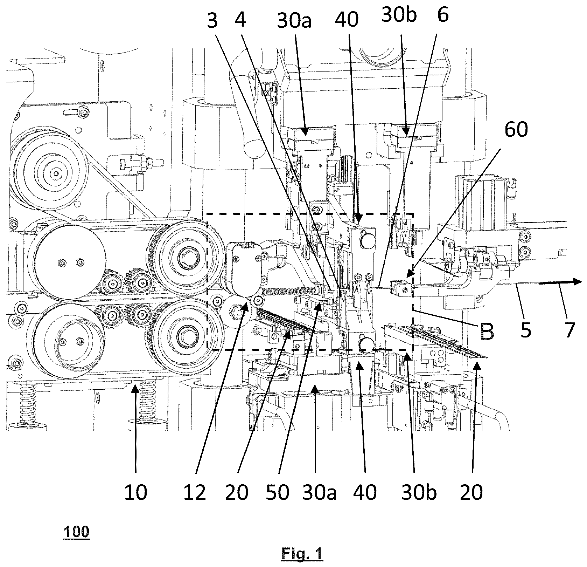

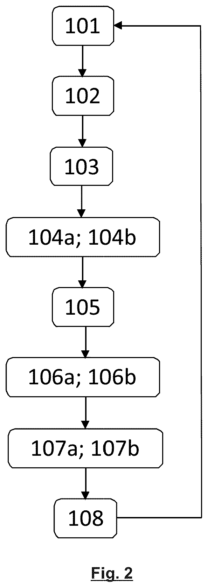

Im nachfolgenden wird die Konfektionierung (Konfektionierungsprozess) eines Kabels durch eine Kabelkonfektioniervorrichtung 100 beispielhaft anhand der Fig. 1 und 2 erläutert. Die Erläuterung bezieht sich auf eine beispielhafte Inline-Kabelkonfektioniervorrichtung 100 mit einer zentrisch schließenden Trenn- und Abisoliereinheit 40, einer vorderen Crimpeinheit 30a, einer hinteren Crimpeinheit 30b, einer Vorschubeinheit 10, einer Stützeinrichtung 50 und einem Fixierungsgreifer 60.

Das Vorratskabel kann durch die Vorschubeinheit 10 entlang der Längsachse 7 des Vorratskabels in Richtung eines Abführbands und/oder des Fixierungsgreifers 60 bewegt werden (Schritt 101 in Fig. 2). Diese Richtung wird im Folgenden als Vorwärtsrichtung bezeichnet. Das vordere Ende 2 des Vorratskabels kann beim Durchqueren eines ansonsten einbautenfreien Bereichs bis mindestens zum Erreichen des Bearbeitungsbereichs durch eine Bewegung der Stützeinrichtung 50 gestützt werden. Das vordere Ende 2 des Vorratskabels kann auf dem Abführband abgelegt sein. Das Abführband kann das vordere Ende 2 des Vorratskabels in derselben Geschwindigkeit bewegen, wie das Vorratskabel von der Vorschubeinheit 10 bewegt wird. Nachdem eine vordefinierte Länge des Vorratskabels an der Trenn- und Abisoliereinheit 40 vorbeigeführt wurde, kann der Fixierungsgreifer 60 das Vorratskabel greifen (Schritt 102 in Fig. 2). Die Trenn- und Abisoliereinheit 40 kann zentrisch so weit geschlossen werden, um das Vorratskabel zu durchtrennen (Schritt 103 in Fig. 2). Das Restkabel 3 und das abgetrennte Kabel 5 können durch das Durchtrennen des Vorratskabels entstehen. Ein vorderes Ende 4 des Restkabels 3 kann entstehen. Das abgetrennte Kabel 5 kann ein hinteres Ende 6 und ein vorderes Ende aufweisen, wobei das vordere Ende des abgetrennten Kabels 5 dem bisherigen (vorigen) vorderen Ende des bisherigen Vorratskabels entsprechen kann. Die Vorschubeinheit 10 kann das Restkabel 3 in eine Position bewegen, in der das vordere Ende 4 des Restkabels 3 um eine vordefinierte Länge über ein vorderes Abisoliermesser der Trenn- und Abisoliereinheit 40 hinausragt (Schritt 104a in Fig. 2). Der Fixierungsgreifer 60 und/oder das Abführband kann das abgetrennte Kabel 5 in eine Position bewegen, in der das hintere Ende 6 des abgetrennten Kabels 5 um eine vordefinierte Länge über ein hinteres Abisoliermesser der Trenn- und Abisoliereinheit 40 hinausragt (Schritt 104b in Fig. 2). Die Schritte 104a und 104b können gleichzeitig erfolgen. Die Schritte 104a und 104b können nacheinander erfolgen. Die Trenn- und Abisoliereinheit 40 kann zentrisch soweit geschlossen werden, dass die Isolierung 9 des Restkabels 3 und/oder die Isolierung 9 des abgetrennten Kabels 5 zumindest teilweise durchtrennt wird (Schritt 105 in Fig. 2). Insbesondere kann die Trenn- und Abisoliereinheit 40 dazu ausgebildet sein, die Isolierung 9 des Restkabels 3 und die Isolierung 9 des abgetrennten Kabels 5 gleichzeitig zumindest teilweise zu durchtrennen. Die Vorschubeinheit 10 kann das Restkabel 3 entgegengesetzt zur Vorwärtsrichtung (rückwärts) entlang der Längsachse 7 des Vorratskabels bewegen, so dass ein Teil der Isolierung (Überstand) des Restkabels 3 vom Leiter des Restkabels 3 abgezogen wird (Schritt 106a in Fig. 2). Der Fixierungsgreifer 60 und/oder das Abführband kann das abgetrennte Kabel 5 vorwärts entlang der Längsachse 7 des Vorratskabels bewegen, so dass ein Teil der Isolierung (Überstand) des abgetrennten Kabels 5 vom Leiter des abgetrennten Kabels 5 abgezogen wird (Schritt 106b in Fig. 2). Die Vorschubeinheit 10 kann anschließend das Restkabel 3 in eine Position bewegen, in der das vordere Ende 4 des Restkabels 3 in einer vordefinierten Position zu der vorderen Crimpeinheit 30a angeordnet ist (Schritt 107a in Fig. 2). Der Fixierungsgreifer 60 und/oder das Abführband kann das abgetrennte Kabel 5 in eine Position bewegen, in der das hintere Ende 6 des abgetrennten Kabels 5 in einer vordefinierten Position zu der hinteren Crimpeinheit 30b angeordnet ist (Schritt 107b in Fig. 2). Die vordere Crimpeinheit 30a und die hintere Crimpeinheit 30b können durch einen gemeinsamen Mechanismus zentrisch bewegt, insbesondere zentrisch geschlossen, werden, um am vorderen Ende 4 des Restkabels 3 (insbesondere durch die vordere Crimpeinheit 30a) und am hinteren Ende 6 des abgetrennten Kabels 5 (insbesondere durch die hintere Crimpeinheit 30b) jeweils ein Kontaktteil 21 anzubringen (Schritt 108 in Fig. 2). Anschließend können die vordere Crimpeinheit 30a und die hintere Crimpeinheit 30b durch einen gemeinsamen Mechanismus geöffnet werden, um das vordere Ende 4 des Restkabels 3 und das hintere Ende 6 des abgetrennten Kabels 5 freizugeben. Ein Abzugsgreifer kann das gecrimpte abgetrennte Kabel 5 von dem Fixierungsgreifer 60 übernehmen, um es aus der Längsachse 7 des Vorratskabels zu bewegen.

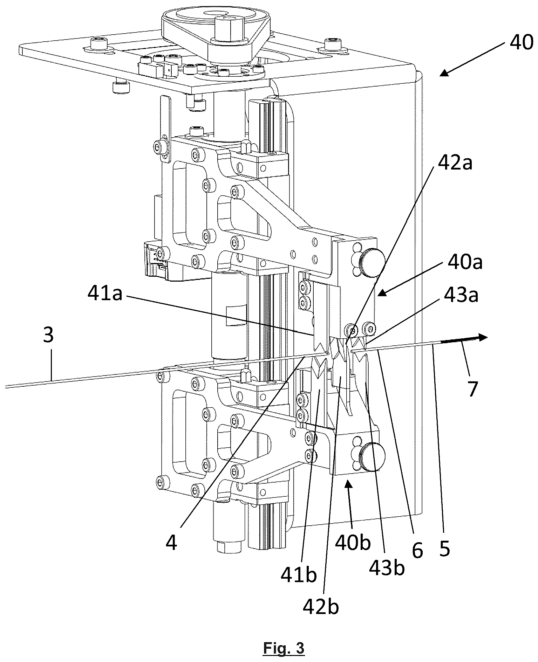

Fig. 3 zeigt eine beispielhafte Ausführungsform einer Trenn- und Abisoliereinheit 40. Die Trenn- und Abisoliereinheit 40 kann ein erstes Trenn- und Abisolierwerkzeug 40a und ein zweites Trenn- und Abisolierwerkzeug 40b aufweisen. Das erste Trenn- und Abisolierwerkzeug 40a kann dem zweiten Trenn- und Abisolierwerkzeug 40b gegenüberliegen. Das erste Trenn- und Abisolierwerkzeug 40a kann ein erstes vorderes Abisoliermesser 41a, ein erstes Trennmesser 42a und ein erstes hinteres Abisoliermesser 43a aufweisen. Das zweite Trenn- und Abisolierwerkzeug 40b kann ein zweites vorderes Abisoliermesser 41b, ein zweites Trennmesser 42b und ein zweites hinteres Abisoliermesser 43b aufweisen. Das erste vordere Abisoliermesser 41a und das zweite vordere Abisoliermesser 41b können einander gegenüberliegend angeordnet sein. Das erste vordere Abisoliermesser 41a und das zweite vordere Abisoliermesser 41b können in Richtung zueinander und/oder in Richtung voneinander bewegbar sein. Das erste vordere Abisoliermesser 41a und das zweite vordere Abisoliermesser 41b können ein vorderes Abisoliermesserpaar 41a, 41b ausbilden. Das erste Trennmesser 42a und das zweite Trennmesser 42b können einander gegenüberliegend angeordnet sein. Das erste Trennmesser 42a und das zweite Trennmesser 42b können in Richtung zueinander und/oder in Richtung voneinander bewegbar sein. Das erste Trennmesser 42a und das zweite Trennmesser 42b können ein Trennmesserpaar 42a, 42b ausbilden. Das erste hintere Abisoliermesser 43a und das zweite hintere Abisoliermesser 43b können einander gegenüberliegend angeordnet sein. Das erste hintere Abisoliermesser 43a und das zweite hintere Abisoliermesser 43b können in Richtung zueinander und/oder in Richtung voneinander bewegbar sein. Das erste hintere Abisoliermesser 43a und das zweite hintere Abisoliermesser 43b können ein vorderes Abisoliermesserpaar 43a, 43b ausbilden. Das Trennmesserpaar 42a, 42b kann das Vorratskabel durchtrennen (siehe auch Fig. 2, Schritt 103), ohne dass das dadurch entstehende vordere Ende 4 des Restkabels 3 und/oder das hintere Ende 6 des abgetrennten Kabels 5 aus der Längsachse 7 des Vorratskabels bewegt werden. Das vordere Abisoliermesserpaar 41a, 41b kann die Isolation des Restkabels 3, zumindest teilweise, durchtrennen (siehe auch Fig. 2, Schritt 105), ohne den Leiter des Restkabels 3 zu beschädigen und ohne das vordere Ende 4 des Restkabels 3 aus der Längsachse 7 des Vorratskabels zu bewegen. Die Isolation des Restkabels 3 kann hierdurch in einen zu konservierenden Bereich und einen Überstand der Isolation des Restkabels 3 unterteilt werden. Das hintere Abisoliermesserpaar 43a, 43b kann die Isolation des abgetrennten Kabels 5, zumindest teilweise, durchtrennen (siehe auch Fig. 2, Schritt 105), ohne den Leiter des abgetrennten Kabels 5 zu beschädigen und ohne das hintere Ende 6 des abgetrennten Kabels 5 aus der Längsachse 7 des Vorratskabels zu bewegen. Die Isolation des abgetrennten Kabels 5 kann hierdurch in einen zu konservierenden Bereich und einen Überstand der Isolation des abgetrennten Kabels 5 unterteilt werden. Das vordere Abisoliermesserpaar 41a, 41b kann den Überstand der Isolation des Restkabels 3 an einer Rückwärtsbewegung entlang der Längsachse 7 des Vorratskabels hindern. Das hintere Abisoliermesserpaar 43a, 43b kann den Überstand der Isolation des abgetrennten Kabels 5 an einer Vorwärtsbewegung entlang der Längsachse 7 des Vorratskabels hindern. Durch eine Rückwärtsbewegung entlang der Längsachse 7 des Vorratskabels des Restkabels 3 kann der Überstand der Isolation des Restkabels 3 von dem Leiter des Restkabels 3 gezogen werden (siehe auch Fig. 2, Schritt 106a). Durch eine Vorwärtsbewegung des abgetrennten Kabels 5 entlang der Längsachse 7 des Vorratskabels kann der Überstand der Isolation des abgetrennten Kabels 5 von dem Leiter des abgetrennten Kabels 5 gezogen werden (siehe auch Fig. 2, Schritt 106b). Das erste und das zweite Trenn- und Abisolierwerkzeug 40a, 40b kann aus der Längsachse 7 des Vorratskabels bewegt werden, um eine freie Bewegung des Vorratskabels, des Restkabels 3 und/oder des abgetrennten Kabels 5 zu ermöglichen. Insbesondere können das erste und das zweite Trenn- und Abisolierwerkzeug 40a, 40b senkrecht zur Längsachse 7 des Vorratskabels voneinander wegbewegt werden.

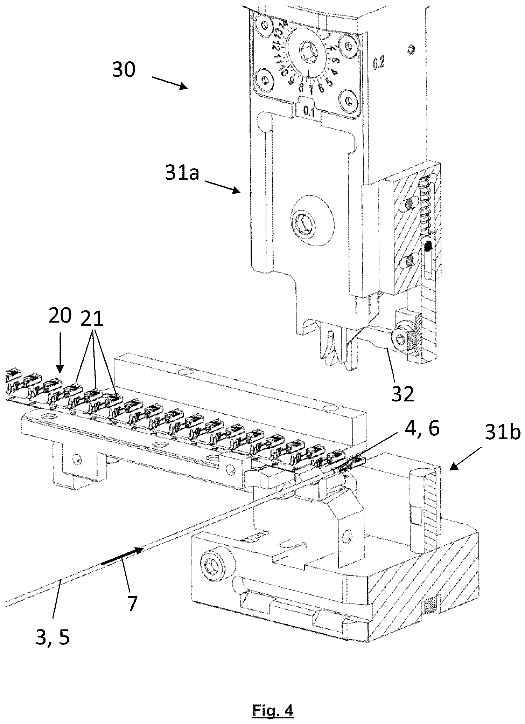

Fig. 4 zeigt eine mögliche Ausführungsform einer Crimpeinheit 30. Eine Crimpeinheit 30 kann ein erstes Crimpwerkzeug 31a (beispielsweise einen Crimper) und ein zweites Crimpwerkzeug 31b (beispielsweise einen Amboss) aufweisen. Eine Crimpeinheit 30 kann dazu ausgebildet sein, ein Kontaktteil 21 an einem Kabelende, beispielsweise dem vorderen Ende 4 des Restkabels 3 und/oder dem hinteren Ende 6 des abgetrennten Kabels 5, zu befestigen.

Das erste Crimpwerkzeug 31a kann einen Kabelabstreifer 32 aufweisen. Der Kabelabstreifer 32 kann dazu eingerichtet sein, ein Kontaktteil 21 und/oder das vordere Ende 4 des Restkabels 3 und/oder das hintere Ende 6 des abgetrennten Kabels 5 aus dem ersten Crimpwerkzeug 31a abzustreifen.

Der Crimpvorgang kann ein unelastisches Verformen eines Kontaktteils 21 beinhalten. Das vordere Ende 4 des Restkabels 3 und/oder das hintere Ende 6 des abgetrennten Kabels 5 kann relativ zu der Crimpeinheit 30 so positioniert sein, dass beim Schließen der Crimpeinheit 30 das vordere Ende 4 des Restkabels 3 und/oder das hintere Ende 6 des abgetrennten Kabels 5 von dem unelastisch verformten Kontaktteil 21, zumindest teilweise, umschlossen wird. Das erste Crimpwerkzeug 31a kann relativ zum zweiten Crimpwerkzeug 31b bewegbar sein. Das zweite Crimpwerkzeug 31b kann relativ zum ersten Crimpwerkzeug 31a bewegbar sein. Das erste Crimpwerkzeug 31a kann in Richtung des zweiten Crimpwerkzeuges 31b bewegbar sein. Das zweite Crimpwerkzeug 31b kann in Richtung des ersten Crimpwerkzeuges 31a bewegbar sein. Das erste Crimpwerkzeug 31a und/oder das zweite Crimpwerkzeug 31b kann senkrecht zur Längsachse 7 des Vorratskabels bewegbar sein. Das erste Crimpwerkzeug 31a und das zweite Crimpwerkzeug 31b können in Richtung zueinander bewegbar sein (Schließen). Das erste Crimpwerkzeug 31a und das zweite Crimpwerkzeug 31b können in Richtung voneinander weg bewegbar sein (Öffnen). Das Schließen der Crimpeinheit 30 kann die Bewegung eines oder beider Crimpwerkzeuge 31a, 31b senkrecht zur Längsachse 7 des Vorratskabels beinhalten. Das vordere Ende 4 des Restkabels 3 und/oder das hintere Ende 6 des abgetrennten Kabels 5 wird vorzugsweise durch das Schließen der Crimpeinheit 30 nicht aus der Längsachse 7 des Vorratskabels bewegt.

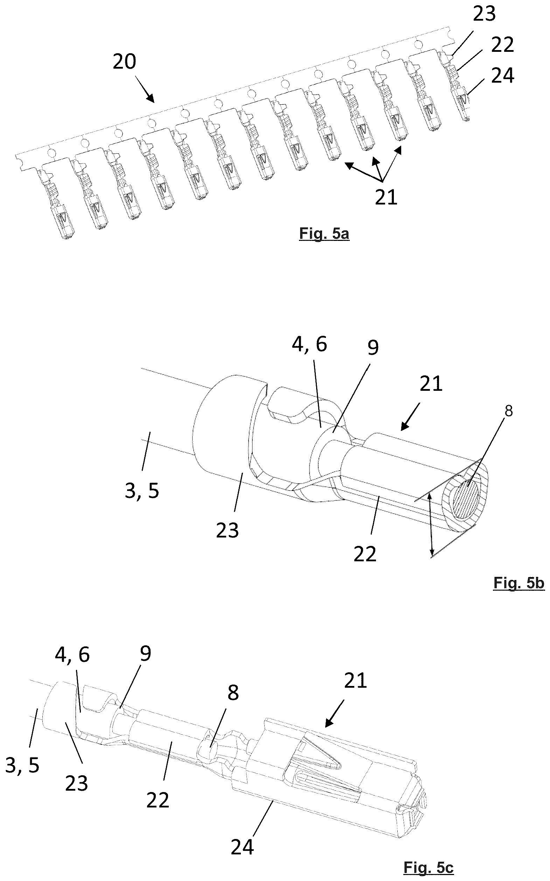

Fig. 5a zeigt eine mögliche Ausführungsform eines Trägerstreifens 20 (siehe auch Fig. 4). Eine Vielzahl von Kontaktteilen 21 kann an dem Trägerstreifen 20 befestigt sein. Eine Trägerstreifenzufuhr kann an dem ersten und/oder an dem zweiten Crimpwerkzeug 31a, 31b und/oder der Crimpeinheit 30 montiert sein (siehe auch Fig. 4). Die Trägerstreifenzufuhr kann einen Trägerstreifen 20 derartig bewegen, dass ein Kontaktteil 21 zwischen dem ersten Crimpwerkzeug und dem zweiten Crimpwerkzeug positioniert wird, insbesondere vor dem Crimpvorgang. Das zwischen dem Crimper und dem Amboss positionierte Kontaktteil 21 kann während des Schließens der Crimpeinheit unelastisch verformt werden. Während des Schließens oder des anschließenden Öffnens der Crimpeinheit kann das Kontaktteil 21 von dem Trägerstreifen 20 gelöst werden.

Die Fig. 5b und 5c zeigen Kabelenden, beispielsweise das vordere Ende 4 des Restkabels 3, das vordere Ende des abgetrennten Kabels und/oder das hintere Ende 6 des abgetrennten Kabels 5, nach dem Crimpvorgang. Die Isolierung 9 eines Teils des Kabelendes 4, 6 kann abisoliert sein, sodass der Leiter 8 des jeweiligen Kabels frei zugänglich sein kann. Das Kontaktteil 21 kann drei Teile aufweisen. Das Kontaktteil 21 kann einen Isolationscrimp 23 aufweisen. Das Kontaktteil 21 kann einen Drahtcrimp 22 aufweisen. Das Kontaktteil 21 kann eine Kontaktzone 24 aufweisen. Das Kontaktteil 21 kann einen Isolationscrimp 23, einen Drahtcrimp 22 und eine Kontaktzone 24 aufweisen. Die Kontaktzone 24 kann dazu ausgebildet sein, einen elektrischen Kontakt zwischen dem Kabelende 4, 6 und einem anderen Gegenstand herzustellen.

Der Isolationscrimp 23 des Kontaktteils 21 kann derartig unelastisch verformt sein, dass er die Isolation 9 des Kabels, zumindest teilweise, umhüllt. Der unelastisch verformte Isolationscrimp 23 kann die Isolation 9 des Kabels einklemmen, um das Kontaktteil 21 mechanisch mit dem Kabelende 4, 6 zu verbinden.

Der Drahtcrimp 22 des Kontaktteils 21 kann derartig unelastisch verformt sein, dass er den Leiter 8 des Kabels, zumindest teilweise, umhüllt. Der unelastisch verformte Drahtcrimp 22 kann den Leiter 8 des Kabels einklemmen, um das Kontaktteil 21 mechanisch und elektrisch mit dem Kabelende 4, 6 zu verbinden.

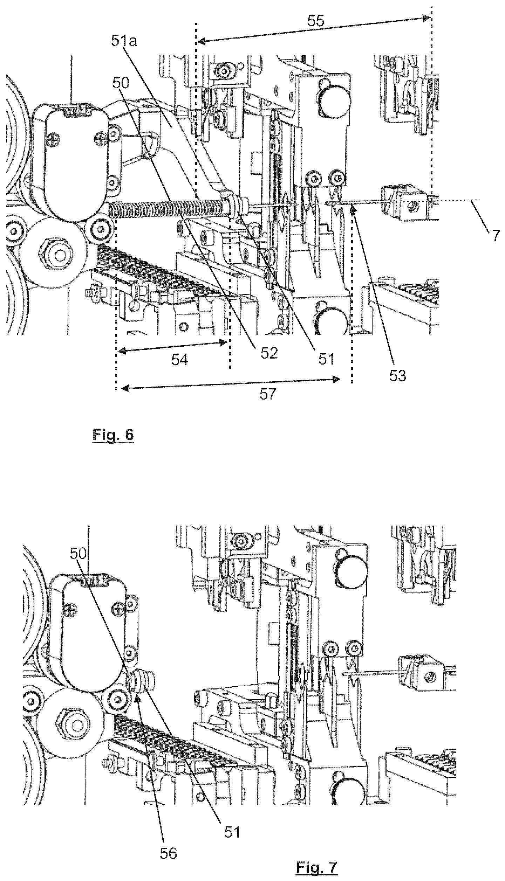

Fig. 6 zeigt eine Ansicht eines Ausschnitts B der Kabelkonfektioniervorrichtung aus Fig. 1, der in Fig. 1 mit einer gestrichelten Linie angedeutet ist. In Fig. 6 ist unter anderem die Kabel-Stützeinrichtung 50 gut zu erkennen. Die Kabel-Stützeinrichtung 50 weist einen vorderen (bearbeitungsbereichseitigen) Stützteil 51 und einen hinteren Stützteil 52 auf. In der Ausführungsform gemäß Fig. 6 ist der hintere Stützteil 52 als Schraubenfeder ausgebildet, was ein gewundenes elastisches Element darstellt. In einem Bearbeitungsbereich 55 sind die vordere Crimpeinheit 30a und die hintere Crimpeinheit 30b sowie die Trenn- und Abisoliereinheit 40 als Bearbeitungseinheiten angeordnet (siehe Fig. 1). Der Bearbeitungsbereich 55 kann als der Bereich angesehen werden, in den die Bearbeitungseinheiten 30a, 30b, 40 eindringen, wenn sie ihre jeweilige Bearbeitungsaufgabe durchführen. Zu dieser Zeit würde ein Vorhandensein der Kabel-Stützeinrichtung 50 im Bearbeitungsbereich stören. Die Kabel-Stützeinrichtung 50 (zumindest der vordere Stützteil 51 der Kabel-Stützeinrichtung 50) ist mittels eines Antriebs (nicht dargestellt), der ein Stützteil-Bewegungssystem 51a antreibt, mindestens bis in den Bearbeitungsbereich 55 hinein zu einer vorderen Position 53 bewegbar.

Fig. 7 zeigt den Ausschnitt analog zu Fig. 6, wobei die Kabel-Stützeinrichtung 50 (der vordere Stützteil der Kabel-Stützeinrichtung 50) mittels des Stützteil-Bewegungssystems 51a an eine hintere Position 56 bewegt ist. Die Kabel-Stützeinrichtung 50 ist also über eine Stützteil-Wegstrecke 57 von der hinteren Position 56 zur vorderen Position 53 beweglich. Der vordere Stützteil 51 nimmt weniger als ein Drittel der Länge der Wegstrecke 57 ein. Zumindest an der hinteren Position 56 stört die Kabel-Stützeinrichtung 50 die Bearbeitungseinheiten 30a, 30b, 40 nicht.

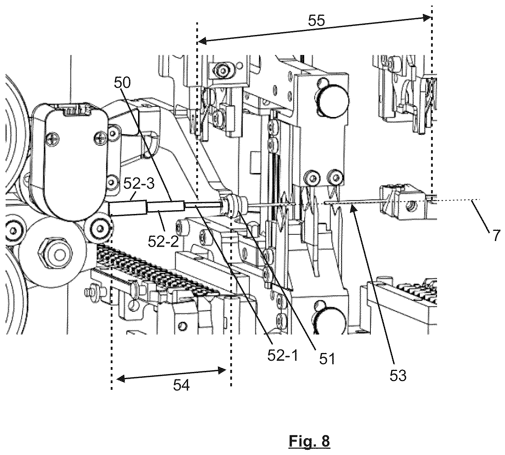

Fig. 8 zeigt eine Ausführungsform analog zu Fig. 6, wobei der hintere Stützteil 52 der Kabel-Stützeinrichtung teleskopierbar ausgebildet ist und ein erstes Teleskopelement 52-1, ein zweites Teleskopelement 52-2 und ein drittes Teleskopelement 52-3 umfasst. Die Offenbarung ist aber nicht auf drei Teleskopelemente beschränkt, und es können beispielsweise auch mehr Teleskopelemente vorhanden sein. Eine weitere denkbare Variante ist ein einteiliges hinteres Stützteil 52, das beispielsweise ähnlich, insbesondere ähnlich schmal, wie das vordere Stützteil 51 ausgebildet ist.

Beim Auftreffen des vorgeschobenen Kabels auf ein Ablageband oder auch auf den Fixiergreifer 60 kann sich eine Axialkraft im Kabel in Gegenrichtung des Einschiessens (Vorschiebens) aufbauen. Die hierin offenbarte Technik kann dazu beitragen, dass sich das Kabel zwischen dem vorderen Stützteil und dem Ende der Vorschubeinheit 10 nicht oder nur noch sehr geringfügig verbiegen kann, wodurch die Produktionsgenauigkeit verbessert werden kann. Diese bewegliche Kabelauflage stellt eine sehr schlanke Lösung dar, wodurch die Vorschubeinheit 10 sehr nahe am ersten Crimpwerkzeug 30a platziert werden kann. Dadurch erfährt das Kabel beim Bearbeiten, insbesondere Abisolieren, weniger Längung: Beim Bearbeiten, insbesondere beim Abisolieren, entstehen Zugkräfte im Kabel, die sich bis in die Vorschubeinheit 10, wo das Kabel wieder geklemmt ist, auswirken. Dadurch dehnt sich ein Kabel, das sich weit von der Vorschubeinheit 10 befindet, beim Bearbeiten mehr aus. Diese Ausdehnungen würden zu einer verringerten Produktqualität führen. Durch die schmale Kabelauflage (den schmalen vorderen Stützteil 51 der Kabel-Stützeinrichtung 52) kann die Distanz zum ersten Crimpwerkzeug 30a und zum Abisoliereinheit 40 kurz gehalten werden, wodurch die Ausdehnung der Kabelisolation zuverlässig verhindert bzw. klein gehalten werden können.

### BEZUGSZEICHENLISTE

- 3: Restkabel
- 4: vorderes Ende des Restkabels
- 5: abgetrennte Kabel
- 6: hinteres Ende des abgetrennten Kabels
- 7: Längsachse des Vorratskabels
- 8: Leiter
- 9: Isolierung
- 10: Vorschubeinheit
- 12: Längenmessvorrichtung
- 20: Trägerstreifen
- 21: Kontaktteil
- 22: Drahtcrimp
- 23: Isolationscrimp
- 24: Kontaktzone
- 30: Crimpeinheit
- 30a: vordere Crimpeinheit
- 30b: hintere Crimpeinheit
- 31: Crimpwerkzeug
- 31a: erstes Crimpwerkzeug
- 31b: zweites Crimpwerkzeug
- 32: Kabelabstreifer
- 33: Fixiermechanismus
- 40: Trenn- und Abisoliereinheit
- 40a: erstes Trenn- und Abisolierwerkzeug
- 40b: zweites Trenn- und Abisolierwerkzeug
- 41a: erstes vordere Abisoliermesser
- 41b: zweites vordere Abisoliermesser
- 42a: erstes Trennmesser
- 42b: zweites Trennmesser
- 43a: erstes hinteres Abisoliermesser
- 43b: zweites hinteres Abisoliermesser
- 50: Stützeinrichtung
- 51: vorderer Stützteil
- 52: hinterer Stützteil
- 53: vorderes Ende
- 54: Strecke bis zur vorderen Position
- 55: Bearbeitungsbereich
- 56: hinteres Ende
- 57: Stützteil-Wegstrecke
- 60: Fixierungsgreifer
- 100: Kabelkonfektioniervorrichtung
- 101: Vorschub des Vorratskabels
- 102: Greifen des vorderen Endes des Vorratskabels
- 103: Durchtrennen des Vorratskabels
- 104a: Positionieren des Restkabels
- 104b: Positionieren des abgetrennten Kabels
- 105: Durchtrennen der Isolierung
- 106a: Abziehen der Isolierung vom Restkabel
- 106b: Abziehen der Isolierung vom abgetrennten Kabel
- 107a: Positionieren des Restkabels
- 107b: Positionieren des abgetrennten Kabels
- 108: Crimpen

## Patentansprüche

1. Kabelkonfektioniervorrichtung (100) zum Konfektionieren von Kabeln, wobei die Kabelkonfektioniervorrichtung Folgendes umfasst:
- eine Vorschubeinheit (10), konfiguriert zum Vorschieben eines Vorratskabels (1) entlang einer Längsachsrichtung des Vorratskabels (1) über ein Ende der Vorschubeinheit (10) hinaus in einen Bearbeitungsbereich (55) hinein; und
- eine Kabel-Stützeinrichtung (50) mit
zumindest einem vorderen Stützteil (51), konfiguriert zum Stützen des vorgeschobenen Vorratskabels (1), und mit
einem Stützteil-Bewegungssystem (51a) zum Bewegen des vorderen Stützteils entlang der Längsachsrichtung über eine Stützteils-Wegstrecke (57) von einer hinteren Position (56) nahe der Vorschubeinheit (10) mindestens bis in den Bearbeitungsbereich hinein hin zu einer vorderen Position (53),
wobei der vordere Stützteil (51) weniger als ein Drittel, optional weniger als ein Viertel, der Länge in Längsachsrichtung der Wegstrecke (57) zwischen der hinteren und der vorderen Position einnimmt.

2. Kabelkonfektioniervorrichtung nach Anspruch 1, wobei die Kabel-Stützeinrichtung (50) weiter mindestens einen hinteren Stützteil (52) umfasst, welcher derart ausgebildet ist, dass er einhergehend mit einer Verschiebung des vorderen Stützteils zumindest teilweise entlang der Längsachsrichtung (7) verschoben wird.

3. Kabelkonfektioniervorrichtung nach Anspruch 2, wobei zumindest einer von dem vorderen und dem hinteren Stützteil der Kabel-Stützeinrichtung teleskopierbar ausgebildet ist.

4. Kabelkonfektioniervorrichtung nach Anspruch 3, wobei der teleskopierbare Stützteil oder die teleskopierbaren Stützteile drei oder mehr Teleskopelemente umfassen.

5. Kabelkonfektioniervorrichtung nach einem der vorherigen Ansprüche, wobei die Kabel-Stützeinrichtung (50) derart ausgebildet ist, dass das vorgeschobene Vorratskabel (1) punktuell gestützt wird.

6. Kabelkonfektioniervorrichtung nach einem der vorherigen Ansprüche, wobei eine Stütz-Gesamtlänge von der Kabel-Stützeinrichtung (50) gestützter Kabelregionen während eines Vorschiebens des vorgeschobenen Vorratskabels (1) kleiner ist als der Abstand des vorderen Stützteils der Stützeinrichtung (50) vom Ende der Vorschubeinheit.

7. Kabelkonfektioniervorrichtung nach Anspruch 6, wobei während des Durchquerens des Vorratskabels entlang der Stützteil-Wegstrecke die Stütz-Gesamtlänge weniger als 80%, optional weniger als 60% oder weniger als 40%, des Abstands des vorderen Stützteils der Stützeinrichtung (50) vom Ende der Vorschubeinheit beträgt.

8. Kabelkonfektioniervorrichtung nach einem der Ansprüche 2 bis 7, wobei der hintere Stützteil der Stützeinrichtung (50) ein [um die Richtung der Kabellängsachse] gewundenes elastisches Element, beispielsweise eine Schraubenfeder, umfasst.

9. Kabelkonfektioniervorrichtung nach Anspruch 8, wobei in einem Zustand, in dem der vordere Stützteil der Stützeinrichtung (50) den kleinstmöglichen Abstand vom Ende der Vorschubeinheit (10) hat, das gewundene elastische Element eine Ausdehnung in Längsachsrichtung von weniger als 40 mm, optional weniger als 30 mm oder weniger als 20 mm, aufweist.

10. Kabelkonfektioniervorrichtung nach Anspruch 8 oder 9, wobei das eine Ende des gewundenen elastischen Elements im Bereich des Endes der Vorschubeinheit (10) befestigt ist und das andere Ende des gewundenen elastischen Elements am vorderen Stützteil befestigt ist.

11. Kabelkonfektioniervorrichtung nach einem der vorherigen Ansprüche, wobei die Kabel-Stützeinrichtung (50) einen Antrieb zum Verschieben des vorderen Stützteils umfasst.

12. Kabelkonfektioniervorrichtung nach einem der vorherigen Ansprüche, wobei die Kabel-Stützeinrichtung vom vorderen Ende der Vorschubeinheit (10) ausgehend bis jenseits des Bearbeitungsbereichs verschiebbar ist.

13. Kabelkonfektioniervorrichtung nach einem der vorherigen Ansprüche, die ferner im Bearbeitungsbereich eine Bearbeitungseinheit, insbesondere eine Abisoliereinheit (40) und/oder eine Crimpeinheit (30a, 30b), umfasst.

14. Kabelkonfektioniervorrichtung nach einem der vorherigen Ansprüche, die ferner auf der dem Bearbeitungsbereich aus Richtung des Endes der Vorschubeinheit gegenüberliegenden Seite eine Übernahmeeinrichtung, insbesondere einen Greifer (60), zum Übernehmen des Kabels umfasst.

15. Verfahren zum Konfektionieren eines Kabels unter Verwendung einer Kabelkonfektioniervorrichtung nach einem der vorherigen Ansprüche, wobei das Verfahren umfasst:
- Vorschieben, mittels der Vorschubeinheit, eines Vorratskabels (1) entlang einer Längsachsrichtung des Vorratskabels (1) über das Ende der Vorschubeinheit (10) hinaus in den Bearbeitungsbereich hinein;
- während des Vorschiebens, Stützen des vorgeschobenen Kabels unter Verwendung der Kabel-Stützeinrichtung (50), wobei das Stützteil-Bewegungssystem das vordere Stützteil einhergehend mit einer Vorschubbewegung des vorgeschobenen Kabels mitbewegt;
- Halten, insbesondere Greifen, des vorgeschobenen Kabels auf der dem Bearbeitungsbereich aus Richtung des Endes der Vorschubeinheit gegenüberliegenden Seite;
- Zurückbewegen des vorderen Stützteils aus dem Bearbeitungsbereich hinaus; und
- Bearbeiten, insbesondere Trennen und/oder Abisolieren und/oder Crimpen, des Kabels im Bearbeitungsbereich.
